# EUROPÄISCHE PATENTSCHRIFT

(11) **EP 2 015 910 B1**
(45) Veröffentlichungstag und Bekanntmachung des Hinweises auf die Patenterteilung: **29.04.2015**
(21) Anmeldenummer: 07728661.5
(22) Anmeldetag: 30.04.2007
(51) Int. Cl.: B29B 13/00, B29C 67/00

(54) **KALTUMFORMUNG VON STYROLHALTIGEN POLYMEREN**
COLD FORMING OF STYRENE-CONTAINING POLYMERS
FAÇONNAGE À FROID DE POLYMÈRES CONTENANT DU STYRÈNE

(30) Priorität: 02.05.2006 EP 06113383
(43) Veröffentlichungstag der Anmeldung: 21.01.2009
(73) Patentinhaber: Styrolution Europe GmbH, 60325 Frankfurt am Main (DE)
(72) Erfinder: SCHADE, Christian, 67063 Ludwigshafen (DE); RENNER, Hans-Jürgen, 67141 Neuhofen (DE)
(74) Vertreter: Büchel, Edwin
(86) Internationale Anmeldenummer: PCT/EP2007/054207
(87) Internationale Veröffentlichungsnummer: WO 2007/125119

(56) Entgegenhaltungen:
- CH-A- 515 105
- US-A- 3 965 230
- VAN MELICK H G H ET AL: "Kinetics of ageing and re-embrittlement of mechanically rejuvenated polystyrene" POLYMER, ELSEVIER, OXFORD, GB, Bd. 44, Nr. 4, Februar 2003 (2003-02), Seiten 1171-1179, XP002436529 ISSN: 0032-3861 in der Anmeldung erwähnt
- L.E.GOVAERT ET AL: "Temporary toughening of polystyrene through mechanical pre-condictioning" POLYMER ELSEVIER, Bd. 42, 2001, Seiten 1271-1274, XP002446872 in der Anmeldung erwähnt

## Beschreibung

Die vorliegende Patentanmeldung bezieht sich auf ein Verfahren zum Überziehen einer Oberfläche mit Polymerüberzügen durch Überführung von styrol- und maleinimidhaltigen Polymeren in einen Zustand duktiler Verformbarkeit durch Krafteinwirkung, bei dem im Anschluss an die Überführung in den Zustand duktiler Verformbarkeit die Polymere in einem weiteren Schritt umgeformt werden.

Styrolhaltige Polymere werden in einer Vielzahl von Anwendungen z. B. in der Möbelindustrie oder in der Automobilindustrie eingesetzt. Insbesondere können styrolhaltige Folien zum Schutz und zur Veredelung von Oberflächen dienen, beispielsweise lassen sich Möbel, Türen oder Bilderrahmen, statt eine Lackierung zu eihalten, mit einer Kunststofffolie überziehen (beispielsweise PermaSkin^{®}-Verfahren der Anmelderin). Kunststofffolien werden auch zur Herstellung von Karosserieteilen verwendet (PFM^{®} = paintless-film-molding der Anmelderin). Ein weiteres Beispiel aus dem Möbelbau ist die Verkleidung von Möbelkanten mit Kantenumleimern.

Nach bisherigen Verfahren werden die Folien dabei unterhalb der Glasübergangstemperatur (T_{G}) der entsprechenden Polymere verarbeitet. Die Folien werden dabei so verformt, dass sie sich der Form des Untergrundes anpassen. Je nach mechanischer Beanspruchung bzw. Krafteinwirkung, d.h. Biegewinkel bzw. Biegeradius, kann bei der Verformung sogenannter Weißbruch auftreten. Dabei bilden sich Bereiche mit kleinen Haarrissen ("crazes"), in denen sich das Polymer ungenügend duktil verformt hat. Diese Crazes sind ein Hinweis auf beginnendes Materialversagen. Einer weiteren Belastung oder dem Angriff eines spannungsrissauslösenden Mediums können solche Zonen im Allgemeinen weniger widerstehen.

US 3,965,230 betrifft beschichtete, kautschukverstärkte Polymerkomposite wie ABS-Polymere, die durch Kaltwalzen des Polymerkomposits und anschließendes konventionelles Lackieren hergestellt werden. Durch das vorherige Kaltwalzen des Polymerkomposits wird die sonst auftretende Sprödigkeit der Beschichtung vermindert.

CH 515105 beschreibt ein Verfahren zur Kaltverformung thermoplastischer Folien oder Tafeln, bei dem thermoplastische Kunststoffe vor der Verformung biaxial kaltgewalzt werden und sich dadurch ohne die bekannten, bei ungewalztem Folienmaterial auftretenden Schwierigkeiten wie Reißen oder Nichtbeibehaltung der Form, verformen lassen.

Im Rahmen der vorliegenden Erfindung wird unter Duktilität bzw. duktiler Verformbarkeit der Polymere die plastische Verformbarkeit der Polymere ohne das Auftreten von Weißbruch verstanden. Duktile Verformbarkeit bzw. Duktilität bedeutet, dass sich ein Stoff unter Krafteinwirkung ohne das Auftreten von Störungen oder Bruch plastisch verformen lässt.

Bei eigentlich transparenten Polymeren zeigt sich Weißbruchverhalten im Auftreten von trüben Bereichen, bei eingefärbten Folien werden weiße Flecken sichtbar. Diese Fehlstellen sind aus ästhetischen Gründen unerwünscht, insbesondere in einem designorientierten Zweig wie dem Möbelbau, zumal sie beginnendes Materialversagen anzeigen. Üblicherweise werden die Fehlstellen durch Erwärmen beseitigt, dies kann mittels Bestrahlung im Infrarotbereich geschehen. Durch mangelnde Duktilität kann des Weiteren der Glanz von Polymeren mit starkem Oberflächenglanz bei Umformungsprozessen beeinträchtigt werden. Auch hierbei handelt es sich um einen unerwünschten und störenden optischen Makel.

Das Deformationsverhalten von Polystyrol unterhalb von T_{G} wurde von Meijer et al. untersucht (Polymer 42 (2001) 1271; Polymer 44 (2003) 1171). Sie konnten zeigen, dass sich Polystyrol nach vorheriger mechanischer Beanspruchung für kurze Zeit duktil verformen lässt. Dabei handelt es sich um einen temporären Effekt. Die mechanische Beanspruchung bestand in Walzen der Probekörper, das zu einer Dickereduktion um 32 % führte. Bei sich anschließenden Kompressionsversuchen war die Schererweichung, die als Ursache für das Auftreten von Fehlstellen bei Verformung genannt wird, bei den vorbehandelten Proben im Gegensatz zu den unbehandelten beziehungsweise gealterten Proben fast völlig verschwunden. Bei Zug-Dehnungsversuchen konnten die vorbehandelten Proben homogen um ca. 20 % gestreckt werden, bis Reißen eintrat, unbehandelte oder wieder gealterte Proben rissen bei etwa 2 % Dehnung, noch bevor die Fließgrenze erreicht wurde. Um duktiles Fließen handelt es sich, wenn die Proben um mindestens 6 % verformt werden können.

Stäbe aus amorphem Homopolystyrol ("Standard-Polystyrol") lassen sich generell erst befriedigend umformen, nachdem bei der Vorbehandlung die Walzen auf bestimmte Temperaturen, häufig etwa 40°C, vorgeheizt und die Walzendrehzahl auf 0,2 s⁻¹ abgesenkt wurde. Unmittelbar nach dem Walzen der Schulterstäbe ist prinzipiell eine weitgehende Verformung möglich, beispielsweise durch spiralartiges mehrfaches Verdrehen. Die Probekörper sind generell nach der Umformung jedoch optisch trüb und zeigen zahlreiche Einspleißstellen. Die trüben Bereiche stellen Weißbruch dar und weisen neben den Einspleißstellen darauf hin, dass die Probekörper nicht duktil verformt wurden. Es kann gesagt werden, dass sich dieses Verfahren somit nicht für die Umformung von Standard-Polystyrol bei Temperaturen unterhalb seiner Glasübergangstemperatur eignet.

Aufgabe der vorliegenden Erfindung ist die Bereitstellung eines Verfahrens zur Überführung von Polymeren aus der Gruppe (A) der styrolhaltigen Polymere mit Ausnahme von Homopolystyrol und aus der Gruppe (B) der maleinimidhaltigen Polymere in einen Zustand duktiler Verformbarkeit, so dass ein weißbruchfreies Verformen der Polymere möglich ist. Werden die Polymere nach Überführung in den duktil verformbaren Zustand weiterverarbeitet, sollen sie keine Fehlstellen nach der Weiterverarbeitung zeigen. Vorzugsweise soll das Verfahren bei niedrigen Temperaturen, insbesondere unterhalb der jeweiligen Glasübergangstemperatur durchführbar sein.

Diese Aufgabe wird gelöst durch ein Verfahren zum Überziehen einer Oberfläche mit Polymerüberzügen durch Überführung von Polymeren aus der Gruppe (A) der styrolhaltigen Polymere mit Ausnahme von Homopolystyrol oder aus der Gruppe (B) der maleinimidhaltigen Polymere in einen Zustand duktiler Verformbarkeit durch das Einwirken einer Kraft auf die Polymere unterhalb ihrer jeweiligen Glasübergangstemperatur und anschließendem Überziehen einer Oberfläche.

Es wurde überraschend gefunden, dass durch die Krafteinwirkung die erfindungsgemäß verwendeten Polymere duktil verformbar werden, d. h., sie können weißbruchfrei verformt werden. Dies hat zur Folge, dass - nach vorheriger Krafteinwirkung - transparente Polymere unter Beibehaltung ihrer vollen Transparenz umgeformt werden können, also ohne Auftreten optisch störender, trüber Fehlstellen. Gefärbte Polymere können ohne Hervorrufen von hellen oder weißen Flecken und Polymere mit hohem Oberflächenglanz ohne Verlust ihres Glanzes umgeformt werden.

Der Weißbruch kann durch optische Verfahren und (elektronen)mikroskopische Verfahren festgestellt werden. Im Allgemeinen wird das Polymer jedoch visuell untersucht werden, da das menschliche Auge empfindlich genug ist. Bei transparenten Produkten erscheint sogenannte Haze, schließlich stellt sich eine Weißtrübung ein. Bei farbigen Produkten wird durch die Zunahme des Streulichtanteils die entsprechende Stelle heller. Weiße Produkte verlieren an Glanz.

Obwohl die Quantifizierung nur über optisch beziehungsweise (elektronen)mikroskopische Verfahren möglich ist, reicht die visuelle Überprüfung aus. Im Rahmen der vorliegenden Erfindung bezeichnet der Begriff "weißbruchfrei" daher den Zustand, in dem das nach dem Verfahren erhaltene Polymer keinen Weißbruch aufweist, der vom Fachmann durch visuelle Überprüfung festgestellt werden kann oder für die geplante Anwendung als störend klassifiziert wird.

Der durch die Krafteinwirkung hervorgerufene Zustand duktiler Verformbarkeit ist nicht von Dauer und die duktile Verformbarkeit lässt mit fortschreitender Zeit nach. Der genaue Zeitraum der duktilen Verformbarkeit hängt von dem verwendeten Polymer oder Polymergemisch sowie der Intensität der Krafteinwirkung ab.

Unter der Gruppe (A) styrolhaltige Polymere werden in der vorliegenden Erfindung mindestens Styrol oder mindestens ein Styrolderivat enthaltende Homopolymere, Copolymere und Polymermischungen verstanden, wobei Homopolystyrol ausgenommen ist. Die Styrol oder Styrolderivate enthaltenden Homopolymere mit Ausnahme von Homopolystyrol, Copolymere und Polymermischungen können weitere, dem Fachmann bekannte Monomersorten als Monomerkomponenten enthalten.

Als Homopolymer wird ein Polymer bezeichnet, das nur eine einzige Monomersorte als Monomerkomponente enthält. Entsprechend bedeutet Homopolystyrol ein Polymer, das als einzige Monomersorte Styrol enthält.

Unter der Gruppe (B) maleinimidhaltige Polymere werden in der vorliegenden Erfindung Polymere, Copolymere und Polymermischungen verstanden, die zumindest als eine Monomerkomponente Maleinimid oder Maleinimidderivate enthalten. Die Polymere der Gruppe (B) können weitere, dem Fachmann bekannte Monomersorten als Monomerkomponenten enthalten.

Copolymere können statistische Copolymere, Blockcopolymere aus zwei, drei und mehr Blöcken, Sterncopolymere, Pfropfcopolymere oder Kern-Schale-Copolymere mit zwei, drei und mehr Schichten sein.

Als Polymermischungen werden Mischungen aus Homopolymeren, Copolymeren sowie aus Co- und Homopolymeren bezeichnet. Die Polymermischungen können zwei, drei und mehr Polymerkomponenten enthalten. Die Polymermischungen können homogen oder heterogen gemischt vorliegen.

Die erfindungsgemäß verwendeten Polymere können weitere übliche, dem Fachmann bekannte Zusätze wie Verarbeitungshilfsmittel, Füllstoffe, Farbpigmente und Farbstoffe, Antioxidantien, Thermostabilisatoren, Antistatika, Flammschutzmittel und ähnliche enthalten.

Als Styrol wird in der vorliegenden Erfindung Styrol als solches bezeichnet. Als Styrolderivate werden die dem Fachmann bekannten und beispielsweise mit 1 bis 8 C-Atome enthaltenden Alkylresten substituiertes Styrol wie Vinyltoluole, darunter α-Methylstyrol, und α-Chlorstyrol umfassenden Monomere sowie Mischungen davon verstanden.

Als weitere Monomerkomponente können übliche, dem Fachmann bekannten Monomere verwendet werden, beispielsweise aliphatische, aromatische und araliphatische Ester der Acrylsäure und Methacrylsäure, Acrylnitril, Methacrylnitril, Maleininsäureanhydrid, Maleinimid, Diene wie Butadien oder Isopren und olefinische Monomere sowie Mischungen davon.

Unter Maleinimid wird in der vorliegenden Erfindung Maleinimid als solches sowie Derivate davon bezeichnet. Unter diese dem Fachmann bekannten Derivate fallen beispielsweise N-Alkylmaleinimide, N-Acrylmaleinimide und N-Arylmaleinimide. Bevorzugt werden Copolymere und Polymermischungen wie SAN (Styrol-Acrylnitril), HIPS (High Impact Polystyrol), ASA (Acrylnitril-Styrol-Acrylamid), SBC (Styrol-Butadien-Blockcopolymere), SMA (Styrol-Maleinsäureanhydrid-Copolymer) sowie SMMA (Styrol-Methylmethacrylat) verwendet. Die verwendeten Polymere können auch schlagzäh modifiziert sein.

Die erfindungsgemäße Krafteinwirkung auf die styrolhaltigen Polymere mit Ausnahme von Homopolystyrol und der maleinimidhaltigen Polymere kann durch Pressen, Biegen, Dehnen, Kneten, allgemein Einwirken von Scherfeldern, Verdrillen oder Walzen geschehen, bevorzugt werden die Polymere mittels Walzen in den Zustand duktiler Verformbarkeit überführt. Für die verschiedenen Polymere, Copolymere und Polymermischungen sowie die verschiedenen Arten der Krafteinwirkung werden die für das erfindungsgemäße Verfahren benötigten Parameter wie Dauer und Intensität der Krafteinwirkung durch geeignete Vorversuche festgestellt. Dies bedeutet, dass je nach gewähltem Polymer und gewählter Art der Krafteinwirkung bei verschiedenen Einstellungen Tests durchgeführt werden, bis die darauf folgende Umformung des Polymers weißbruchfrei möglich ist.

Bei Krafteinwirkung durch Walzen werden die Walzvorgänge generell durch Wahl der Spaltdicke und der Walzendrehzahl eingestellt. Die genau benötigten Einstellungen können durch Vorversuche ermittelt werden. Bevorzugt wird der Spalt so gewählt, dass das Walzen zu einer Dickereduktion von mindestens 5 %, besonders bevorzugt von mindestens10 %, ganz besonders bevorzugt von mindestens 15 % führt. Die Walzendrehzahl liegt zwischen 0,001 Hz und 20 Hz, bevorzugt zwischen 0,01 Hz und 5 Hz, besonders bevorzugt bei 0,05 Hz und 1 Hz. Dabei ist Hz äquivalent zu s⁻¹, beides bedeutet Walzenumdrehungen pro Sekunde.

Die Walzen sind zylindrische Rotationskörper mit glatter, geriefter oder modellierter Oberfläche. Bevorzugt werden metallische Walzen mit glatter Oberfläche eingesetzt. Sie sind bevorzugt biegesteif und besitzen eine hinreichende Oberflächenhärte. Sie werden beispielsweise durch Hartgussverfahren oder aus Stahl mit gehärteter Oberfläche hergestellt. Sie sind bevorzugt beheizbar. Die Walzendurchmesser liegen in dem Bereich von wenigen mm bis mehr als 1 m.

Die Überführung in den Zustand duktiler Verformbarkeit durch Krafteinwirkung wird üblicherweise bei Raumtemperatur durchgeführt. Sie kann jedoch auch bei leicht erhöhten Temperaturen vorgenommen werden. Die Temperatur soll dabei die Glasübergangstemperatur des jeweiligen Polymeren nicht überschreiten. Bei Polymermischungen können die einzelnen Komponenten unterschiedliche Glasübergangstemperaturen aufweisen, dies ist beispielsweise bei den mittels Kautschuk modifizierten Polymermischungen der Fall; die als Kautschukmodifizierer verwendeten Polymere besitzen zum Teil Glasübergangstemperaturen von 0 °C und niedriger. Wenn heterogene, also in mehreren Phasen vorliegende Polymermischungen zwei Glasübergangstemperaturen zeigen, wird sich in der vorliegenden Erfindung auf die Glasübergangstemperatur des Polymers, Copolymers oder der Polymermischung bezogen, die die Matrixphase bildet.

Bevorzugt wird die Krafteinwirkung mindestens 10°C unterhalb von T_{G}, besonders bevorzugt mindestens 30°C unterhalb von T_{G}, ganz besonders bevorzugt mindestens 60°C unterhalb von T_{G} durchgeführt.

Im Anschluss an die Überführung durch Krafteinwirkung der styrolhaltigen Polymere mit Ausnahme von Homopolystyrol und der maleinimidhaltigen Polymere in einen Zustand der duktilen Verformbarkeit findet eine Umformung der Polymere statt. Nach dem erfindungsgemäßen Verfahren wird der Zeitraum zwischen Krafteinwirkung und Umformung der styrolhaltigen Polymere mit Ausnahme von Homopolystyrol und der maleinimidhaltigen Polymere so gewählt, dass sich die Polymere noch duktil verformen lassen. Der mögliche zeitliche Abstand zwischen Krafteinwirkung und Umformung kann durch geeignete Vorversuche ermittelt werden, vorzugsweise werden die Polymere direkt im Anschluss an die Krafteinwirkung umgeformt.

Die Umformung kann beispielsweise mittels dem Fachmann bekannten Verfahren wie Kalandrieren, Biegen, Prägen und Ziehverfahren wie Tiefziehen durchgeführt werden.

Die erfindungsgemäß mittels Krafteinwirkung in den Zustand duktiler Verformbarkeit überführten Polymere lassen sich verformen, ohne dass dabei Fehlstellen in den Polymeren auftreten, und zeichnen sich durch weißbruchfreies Biegeverhalten aus, d.h. bei transparenten Polymeren treten beim Biegen keine trüben Stellen auf und eingefärbte Polymere lassen sich ohne das Entstehen von weißen Flecken verformen. Weiterhin bleibt der Oberflächenglanz der Polymere erhalten.

Die nach dem erfindungsgemäßen Verfahren in den duktilen Zustand überführten Polymere können beispielsweise in Form von Folien in vielen Anwendungen verarbeitet werden, wie dem Perma-Skin-Verfahren; Möbel, Türen, Fenster oder Bilderrahmen können mit einem Polymerüberzug versehen werden. Aufgrund der weißbruchfreien Weiterverarbeitung eignen sich die erfindungsgemäß vorbehandelten Polymere für den Einsatz in designorientierten Bereichen, in denen großer Wert auf den optischen Eindruck der Produkte gelegt wird. Dazu gehört z. B. die Möbelindustrie, die Automobilindustrie oder die Verpackungsindustrie. Das erfindungsgemäße Verfahren eröffnet eine größere Freiheit in Formwahl und Design beim Einsatz der Polymere.

Nach dem erfindungsgemäßen Verfahren können aus den Polymeren, insbesondere in Form von Folien, auch dreidimensionale Körper geformt werden. Dazu zählen beispielsweise Verpackungen sowohl dekorativer als auch schützender Natur für unterschiedliche Güter wie Nahrungsmittel, Kleinteile, Kosmetika, Kleingeräte, Zwischenverpackungen zu Schutz gegen Transportschäden, Einsätze zur Aufbewahrung von Kleinteilen, Spielzeug, Geschirr aus Kunststoff oder Hohlkörper wie Blumenkästen. Die aus den erfindungsgemäß vorbehandelten Polymeren hergestellten Formen sind nicht in ihrer Größe begrenzt. Auch große Gebilde lassen sich aus den duktilen Polymeren formen, beispielsweise Sandkästen.

Auch eignet sich das Verfahren für extrudierte Polymere oder Polymermischungen, die anschließend an die Extrusion noch einem Formgebungsverfahren unterworfen werden. Beispielsweise lassen sich Profile und Halbzeuge wie Rohre nach dem erfindungsgemäßen Verfahren verarbeiten.

Im Folgenden sollen die erfindungsgemäßen Verfahren anhand von Beispielen erläutert werden.

### Beispiele

Die Beispiele 1 bis 4 wurden anhand von 4 mm dicken Schulterstäben durchgeführt, in Beispiel 5 wurde eine 0,3 mm dicke Folie verwendet. Der Walzenabstand betrug 2 mm, soweit nicht anders angegeben.

### Beispiel 1:

Standard-Polystyrol mit einem mittleren Molekulargewicht von 265000 D (nicht erfindungsgemäß):
A) Walzen bei Raumtemperatur bei einer Walzendrehzahl von 0,2 Hz:
   Die Kaltwalzung führt in den meisten Fällen zu Bruch und zerspleißenden Schulterstäben.
B) Walzen bei 40°C und einer Walzendrehzahl von 0,2 Hz:
   Unmittelbar nach dem Walzen der Schulterstäbe war eine weitergehende Verformung möglich, beispielsweise durch spiralartiges mehrfaches Verdrehen. Die Probekörper waren nach der Umformung jedoch optisch trüb und zeigten zahlreiche Einspleißstellen.
C) Walzen bei 40°C und einer Walzendrehzahl von 0,2 Hz, 1 min. Ruhezeit:
   Keine Verdrillung ohne Bruch mehr möglich.

### Beispiel 2:

Umformung von styrolhaltigen und mindestens ein weiteres Monomer enthaltenden Polymeren:
A) Verformung ohne Vorbehandlung durch Walzen (nicht erfindungsgemäß):
   a) SAN mit einem mittleren Molekulargewicht von 180000 D und einem Verhältnis Styrol : Acrylnitril von 75 : 25
      Verdrehen der Probekörper führte zu Bruch, Rissbildung oder starkem Weißbruchverhalten.
   b) HIPS aus einem Blend aus PS mit einem mittleren Molekulargewicht von 265000 D und einem HIPS mit einem mittleren Molekulargewicht von 187000 D mit einem Polybutadiengehalt von 8 Gew.-% im Verhältnis von 1 : 1
      Verdrehen der Probekörper führte zu Bruch, Rissbildung oder starkem Weißbruchverhalten.
   c) ASA mit einem mittleren Matrixmolekulargewicht von 160000 D und einem Verhältnis von Styrol : Acrylnitril : Butylacrylat von 55 : 25 : 20
      Verdrehen der Probekörper führte zu Bruch, Rissbildung oder starkem Weißbruchverhalten.
B) Vorbehandlung der Proben durch Walzen bei Raumtemperatur und Walzendrehzahlen von 0,2 Hz:
   a) SAN gemäß Beispiel 2 A) a)
      Die Probekörper ließen sich sehr leicht duktil verformen, zum Beispiel durch spiralartiges mehrfaches Verdrehen. An den zum Teil stark verdrehten Probekörpern war kein Weißbruchverhalten zu entdecken. Ein Einspleißen war nicht zu beobachten. Nach der Umformung zeigten die Probekörper trübungsfreie Transparenz.
   b) HIPS gemäß Beispiel 2 A) b)
      Die Probkörper ließen sich sehr leicht duktil verformen, zum Beispiel durch spiralartiges mehrfaches Verdrehen. An den zum Teil stark verdrehten Probekörper war kein Weißbruchverhalten zu entdecken. Ein Einspleißen war nicht zu beobachten. Nach der Umformung zeigten die Probekörper hohen Glanz.
   c) ASA gemäß Beispiel 2A) c)
      Die Probekörper ließen sich sehr leicht duktil verformen, zum Beispiel durch spiralartiges mehrfaches Verdrehen. An den zum Teil stark verdrehten Probekörpern war kein Weißbruchverhalten zu entdecken. Ein Einspleißen war nicht zu beobachten. Nach der Umformung zeigten die Probekörper trübungsfreie Transparenz.

### Beispiel 3:

Untersuchung des Einflusses des Walzenabstandes anhand von ASA gemäß Beispiel 2 A) c) mit einem Walzenabstand von 3,5 mm bei 30°C und einer Walzendrehzahl von 0,2 Hz.

Die Schulterstäbe ließen sich duktil und weißbruchfrei verformen.

### Beispiel 4:

Dauer der duktilen Verformbarkeit anhand von HIPS gemäß Beispiel 2 A) b), bei 40°C und einer Walzendrehzahl von 0,2 Hz:

Die Schulterstäbe konnten bis zu 10 Minuten nach der Vorbehandlung noch verdrillt werden.

### Beispiel 5:

Herstellung von Bilderrahmen durch Überziehen eines Aluminium-Vierkantprofils mit einer eingefärbten Folie aus ASA gemäß Beipiel2 A) c)
A) keine Vorbehandlung (nicht erfindungsgemäß):
   Bei starken Biegeradien tritt unter Umständen Weißbruch auf, der bei dunklen Farben deutlich sichtbar ist, was die Anmutungsqualität oder gar die Funktion der Folie beeinträchtigt.
B) Vorbehandlung durch Walzen bei 40°C mit einem Walzenspalt von 0,1 mm und einer Walzendrehzahl von 0,15 Hz (erfindungsgemäß):
   Im stark beanspruchten Eckbereich zeigte die vorgewalzte Folie nur eine äußerst geringe Neigung zu Weißbruch.

## Patentansprüche

1. Verfahren zum Überziehen einer Oberfläche mit Polymerüberzügen durch Überführung von Polymeren der Polymerüberzüge, gewählt aus der Gruppe (A) der styrolhaltigen Polymere mit Ausnahme von Homopolystyrol oder aus der Gruppe (B) der maleinimidhaltigen Polymere, in einen Zustand duktiler Verformbarkeit durch das Einwirken einer Kraft auf die Polymere unterhalb ihrer jeweiligen Glasübergangstemperatur und anschließendem Überziehen einer Oberfläche.

2. Verfahren nach Anspruch 1, **dadurch gekennzeichnet, dass** die Polymere in Form von Folien verarbeitet werden.

3. Verfahren nach Anspruch 1 oder 2, **dadurch gekennzeichnet, dass** die Krafteinwirkung durch Walzen geschieht.

4. Verfahren nach Anspruch 3, **dadurch gekennzeichnet, dass** das Walzen zu einer Dickereduktion von mindestens 5 % führt.

5. Verfahren nach Anspruch 3, **dadurch gekennzeichnet, dass** das Walzen zu einer Dickereduktion von mindestens 10 % führt.

6. Verfahren nach einem der Ansprüche 1 bis 5, **dadurch gekennzeichnet, dass** die Polymere gewählt sind aus der Gruppe (A) der Styrol und seine Derivate enthaltenden Homopolymere, Copolymeren und Polymermischungen mit Ausnahme von Homopolystyrol, oder aus der Gruppe (B) der Maleinimid und seine Derivate enthaltenden Homopolymeren, Copolymeren und Polymermischungen.

7. Verfahren nach Anspruch 6, **dadurch gekennzeichnet, dass** es sich bei den Polymeren um Poly(styrolacrylnitril), High Impact Polystyrol, Poly(acrylnitrilstyrolacrylamid), Poly(styrol-b-butadien), Poly(styrol-maleinsäureanhydrid) sowie Poly(styrolmethylmetacrylat) handelt.

8. Oberfläche mit Polymerüberzügen herstellbar nach einem der Verfahren der Ansprüche 1 bis 7.

## Claims

1. Process for coating of a surface with polymer coatings via conversion of polymers of the polymer coatings, selected from the group (A) of the polymers comprising styrene, with the exception of homopolystyrene, or from the group (B) of the polymers comprising maleimide, to a condition of ductile deformability through the action of a force on the polymers below their respective glass transition temperature and then coating of a surface.

2. Process according to Claim 1, **characterized in that** the polymers are processed in the form of foils.

3. Process according to Claim 1 or 2, **characterized in that** the action of the force takes place via rolls.

4. Process according to Claim 3, **characterized in that** the rolling process leads to a thickness reduction of at least 5%.

5. Process according to Claim 3, **characterized in that** the rolling process leads to a thickness reduction of at least 10%.

6. Process according to any of Claims 1 to 5, **characterized in that** the polymers have been selected from the group (A) of the polymer mixtures, copolymers, and homopolymers comprising styrene and comprising its derivatives, with the exception of homopolystyrene, or from the group (B) of the polymer mixtures, copolymers, and homopolymers comprising maleimide and comprising its derivatives.

7. Process according to Claim 6, **characterized in that** the polymers are poly(styrene-acrylonitrile), high-impact polystyrene, poly(acrylonitrilestyrene-acrylamide), poly(styrene-b-butadiene), poly(styrene-maleic anhydride) or poly(styrene-methyl methacrylate).

8. Surface with polymer coatings amenable to production according to any of the processes of Claims 1 to 7.

## Revendications

1. Procédé de revêtement d'une surface avec des revêtements polymères par transformation de polymères des revêtements polymères, choisis dans le groupe (A) constitué par les polymères contenant du styrène à l'exception de l'homopolystyrène ou dans le groupe (B) constitué par les polymères contenant du maléinimide, à un état de déformabilité ductile par l'action d'une force sur les polymères sous leur température de transition vitreuse respective, puis revêtement d'une surface.

2. Procédé selon la revendication 1, **caractérisé en ce que** les polymères sont usinés sous la forme de feuilles.

3. Procédé selon la revendication 1 ou 2, **caractérisé en ce que** l'action de la force a lieu par cylindrage.

4. Procédé selon la revendication 3, **caractérisé en ce que** le cylindrage conduit à une réduction d'épaisseur d'au moins 5 %.

5. Procédé selon la revendication 3, **caractérisé en ce que** le cylindrage conduit à une réduction d'épaisseur d'au moins 10 %.

6. Procédé selon l'une quelconque des revendications 1 à 5, **caractérisé en ce que** les polymères sont choisis dans le groupe (A) constitué par les homopolymères, copolymères et mélanges de polymères contenant du styrène et ses dérivés, à l'exception de l'homopolystyrène, ou dans le groupe (B) constitué par les homopolymères, copolymères et mélanges de polymères contenant du maléinimide et ses dérivés.

7. Procédé selon la revendication 6, **caractérisé en ce que** les polymères consistent en le poly(styrène-acrylonitrile), le polystyrène à résistance aux impacts élevée, le poly(acrylonitrile-styrène-acrylamide), le poly(styrène-b-butadiène), le poly(styrène-anhydride d'acide maléique) et le poly(styrène-méthacrylate de méthyle).

8. Surface comprenant des revêtements polymères, pouvant être fabriquée par un procédé selon les revendications 1 à 7.
